# EUROPÄISCHE PATENTSCHRIFT

(11) **EP 3 676 086 B1**
(45) Veröffentlichungstag und Bekanntmachung des Hinweises auf die Patenterteilung: **19.05.2021**
(21) Anmeldenummer: 18752454.1
(22) Anmeldetag: 06.08.2018
(51) Int. Cl.: B32B 5/02, B32B 7/04, B32B 15/04, B32B 15/092, B32B 15/095, B32B 15/14, B32B 15/20, B32B 27/08, B32B 27/10, B32B 27/12, B32B 27/42, B32B 29/00, B32B 29/02, B32B 3/02, B32B 3/04, B32B 3/12, B32B 3/26, B32B 3/30, B32B 7/02

(54) **FAHRZEUG-SANDWICHBAUTEIL UND VERFAHREN ZUM HERSTELLEN EINES FAHRZEUG-SANDWICHBAUTEILS**
VEHICLE SANDWICH COMPONENT AND METHOD FOR PRODUCING A VEHICLE SANDWICH COMPONENT
COMPOSANT SANDWICH DE VÉHICULE ET PROCÉDÉ DE FABRICATION D'UN COMPOSANT SANDWICH DE VÉHICULE

(30) Priorität: 29.08.2017 DE 102017008097
(43) Veröffentlichungstag der Anmeldung: 08.07.2020
(73) Patentinhaber: Webasto SE, 82131 Stockdorf (DE)
(72) Erfinder: BAUMANN, Matthias, 82131 Stockdorf (DE); KIESEWETTER, Frank, 82131 Stockdorf (DE); LEGLER, Dirk, 82131 Stockdorf (DE); WOKOECK, Jan, 82131 Stockdorf (DE)
(74) Vertreter: Fischer & Konnerth
(86) Internationale Anmeldenummer: PCT/EP2018/071275
(87) Internationale Veröffentlichungsnummer: WO 2019/042713

(56) Entgegenhaltungen:
- EP-A1- 3 037 601
- EP-A2- 0 624 459
- WO-A1-2007/071929
- DE-A1-102008 033 923
- US-A1- 2015 273 787

## Beschreibung

Die Erfindung betrifft ein Fahrzeug-Sandwichbauteil mit einem eine Wabenstruktur aufweisenden Schichtaufbau sowie ein Verfahren zum Herstellen eines Fahrzeug-Sandwichbauteils.

Ein solches Fahrzeug-Sandwichbauteil ist beispielsweise ein Deckel eines Dachöffnungssystems wie eines Schiebedaches oder eines Spoilerdaches, ein Flächenbauteil eines Dachmoduls, ein Verkleidungsbauteil eines Fahrzeugs oder auch eine Hutablage oder ein Schiebehimmel.

Sandwichbauteile im Fahrzeugbau sind zumeist als flächige Bauteile mit einheitlicher Bauteildicke ausgeführt. Dies gilt insbesondere für Bauteile wie Hutablagen, Schiebehimmel oder gesamte Fahrzeugdächer. Eine Kernstruktur dieser Bauteile wird mittels eines homogenen Wabenkerns mit konstanter Wabenstärke gefertigt. Für Bauteile mit erhöhten Festigkeitsanforderungen oder durch Design definierten Konturen, wie z. B. Cabriospriegel, die große Dickensprünge aufweisen, können keine Waben mit konstanter Dicke verwendet werden. Speziell im Bauteilrandbereich sind besonders dünne Querschnitte gefordert, während im Innenbereich des Bauteils große Dicken gefordert sind. Dementsprechend müssen die Waben aufwändig mechanisch spanend bearbeitet werden, da andernfalls die Gefahr besteht, dass die im Verfahren komprimierten Wabenteile im Randbereich aufgrund zu geringer Kunststoffdurchdringung insbesondere durch Einwirkung von Feuchtigkeit aufquellen können.

Aus der EP 3 037 601 A1 ist ein Wabenkernaufbau sowie ein Sandwichbauteil mit einem solchen Wabenkernaufbau mit zwei Wabenkernen oder Wabenschichten bekannt geworden. Die zwei Wabenkerne weisen eine zwischen den zwei Wabenkernen angeordnete Verbindungsschicht auf, die lediglich im Bereich der Stege der Wabenkerne Klebstoff zur Verbindung mit den Wabenkernen aufweist. Dieser Wabenkernaufbau wird mit ein- oder beidseitig aufgebrachten Deckschichten in einem Formpresswerkzeug zu einem Sandwichbauteil formgepresst.

Der Erfindung liegt die Aufgabe zugrunde, ein eingangs genanntes Fahrzeug-Sandwichbauteil zu schaffen, das hinsichtlich seines Herstellungsaufwandes verbessert ist, sowie ein Verfahren zum Herstellen eines solchen Fahrzeug-Sandwichbauteils bereitzustellen.

Diese Aufgabe wird bei dem eingangs genannten Fahrzeug-Sandwichbauteil erfindungsgemäß dadurch gelöst, dass die Wabenstruktur eine erste untere Wabenschicht und eine zweite obere Wabenschicht aufweist, dass die erste untere Wabenschicht zumindest einen Randabschnitt, der in Querrichtung seitlich über die zweite obere Wabenschicht hinaus ragt, sowie einen zentralen Wabenschichtbereich oder Kompressionsbereich aufweist, der eine durch Komprimierung relativ zum Randabschnitt reduzierte Dicke aufweist und auf dem die zweite obere Wabenschicht angeordnet ist.

Die Aufgabe wird des Weiteren durch ein Verfahren mit den Merkmalen des Anspruchs 7 gelöst.

Vorteilhafte Ausgestaltungen der Erfindung sind jeweils in den abhängigen Ansprüchen angegeben.

Bei dem vorgeschlagenen Fahrzeug-Sandwichbauteil kann die Wabenstruktur mit unterschiedlichen Dicken, z. B. im zentralen Bereich gegenüber einem Randbereich, in kostengünstiger Weise ohne eine spanende Bearbeitung der Wabenschichten hergestellt werden. Dabei kann grundsätzlich diejenige Wabenschicht, die die geringere Drucksteifigkeit aufweist, mittels eines eigenständigen Verformungs- oder Pressvorgangs in dem vorgesehenen Kompressionsbereich auf die gewünschte Dicke reduziert werden, bevor die beiden Wabenschichten zum Bilden der Wabenstruktur miteinander verbunden werden. Besonders bevorzugt ist es jedoch, wenn in einem Form- oder Presswerkzeug die beiden noch unverformten Wabenschichten in der gewünschten gegenseitigen Ausrichtung aneinander positioniert gehalten werden und durch Pressdruck die druckfestere Wabenschicht in die weniger druckfeste Wabenschicht eingepresst wird, so dass die weniger druckfeste Wabenschicht im Anlagebereich der druckfesteren Wabenschicht auf die gewünschte reduzierte Dicke komprimiert wird. Dabei wird zumindest ein Randbereich der weniger druckfesten Wabenschicht nicht oder nur geringfügig komprimiert und gegebenenfalls nur in seiner Außenkontur an die gewünschte Form des Sandwichbauteils angepasst und z. B. zum Rand hin abgeschrägt.

Die Dicke der jeweiligen Wabenschicht und ihre Druckfestigkeit werden in Abhängigkeit des herzustellenden Sandwichbauteils gewählt. Die Drucksteifigkeit jeder der beiden Wabenschichten kann z. B. durch Verwendung unterschiedlicher Wabenmaterialien und Wabenkonstruktionen, geringerer Papierstärken oder unterschiedlicher Papiersorten bei Papierwaben oder z. B. durch die Verwendung von verschiedenen Wabenklebstoffen eingestellt werden.

Die beiden Wabenschichten werden als erste Wabenschicht und als zweite Wabenschicht bezeichnet und können - in Abhängigkeit ihrer jeweiligen Stellungen zueinander in einem Formwerkzeug oder in einer späteren Einbaulage des Fahrzeugsandwich-Bauteils - auch als untere Wabenschicht und als obere Wabenschicht bezeichnet werden, wobei diese Positionsangaben demzufolge austauschbar sind.

Gemäß einer besonders bevorzugten Gestaltung ist vorgesehen, dass die obere oder drucksteifere Wabenschicht mit der unteren oder weniger drucksteifen Wabenschicht im zentralen Kompressions- oder Wabenschichtbereich eine gemeinsame Kontakt- oder Anlagefläche aufweist. Zur Verbindung der beiden Wabenschichten kann vorgesehen sein, dass sich ein Kunststoff wie z. B. Polyurethan einer insbesondere faserverstärkten unteren Kunststoffschicht, die eine Deckschicht auf der unteren oder weniger drucksteifen Wabenschicht bildet, durch den zentralen Kompressions- oder Wabenschichtbereich der unteren Wabenschicht erstreckt und eine feste Verbindung mit der oberen Wabenschicht bildet, wobei sie zweckmäßigerweise in diese unverformte Wabenschicht nur in einen dünnen Kontaktbereich eindringt. Ein zusätzliches Befestigungsmittel ist daher nicht erforderlich. Die feste Kunststoffverbindung verhindert eine federnde nachgebende Bewegung der Wabenstruktur des Sandwichbauteils unter Belastung. Unverformte Bereiche der drucksteiferen Wabenschicht sollten von dem Kunststoff aus Gründen der Gewichtsersparnis dieses ein Leichtbauteil darstellenden Sandwichbauteils nicht ausgesteift werden.

Zweckmäßigerweise bildet eine insbesondere faserverstärkte untere Kunststoffschicht eine untere oder innenseitige Deckschicht und eine insbesondere faserverstärkte obere Kunststoffschicht eine obere oder außenseitige Deckschicht des Sandwichbauteils.

Der Randabschnitt des Sandwichbauteils, der mit reduzierter Dicke gegenüber dem zentralen Bereich des Sandwichbauteils gebildet ist, ist am Sandwichbauteil umlaufend oder zumindest in einem oder in mehreren Abschnitten gebildet.

Durch ein erfindungsgemäßes Verfahren gemäß Anspruch 7 kann ein besonders leichtes und dennoch festes Fahrzeug-Sandwichbauteil mit unterschiedlichen Bauteildicken durch Formprozesse ohne spanende Bearbeitung hergestellt werden, wie voranstehend beschrieben ist. Bei einem Verfahren zum Herstellen eines Fahrzeug-Sandwichbauteils mit einem Schichtaufbau mit einer Wabenstruktur sowie einer ersten oder inneren Deckschicht werden in einem Presswerkzeug zwei Wabenschichten aus Wabenmaterialien mit unterschiedlichen Drucksteifigkeiten gegeneinander gepresst und dabei komprimiert die zweite drucksteifere Wabenschicht die erste weniger drucksteife Wabenschicht im Bereich der gemeinsamen Anlagefläche in einem Kompressions- oder Wabenschichtbereich auf eine reduzierte Dicke. Weiterhin dringt ein Kunststoff einer insbesondere faserverstärkten äußeren Kunststoffschicht, die die Deckschicht auf der komprimierten Wabenschicht bildet, durch den Kompressions- oder Wabenschichtbereich der ersten komprimierten Wabenschicht hindurch und bildet eine feste Verbindung mit der anderen zweiten Wabenschicht.

Dabei kann bei diesem Verfahren bevorzugt vorgesehen sein, dass das Sandwichbauteil mit zumindest einem Randabschnitt hergestellt wird, der in der ersten weniger drucksteifen Wabenschicht außerhalb ihres Kompressions- oder Wabenschichtbereichs und außerhalb der anderen zweiten drucksteiferen Wabenschicht gebildet wird.

Zweckmäßigerweise wird eine zweite oder äußere Deckschicht auf die Wabenstruktur aufgebracht.

Zweckmäßigerweise ist das voranstehend beschriebene Verfahren zum Herstellen eines Fahrzeug-Sandwichbauteils nach einem der Ansprüche 1 bis 6 und gemäß den voranstehenden Erläuterungen vorgesehen.

Nachfolgend wird die Erfindung anhand eines Ausführungsbeispiels eines erfindungsgemäßen Fahrzeug-Sandwichbauteils unter Bezugnahme auf die Zeichnung näher erläutert. Es zeigt:
- Fig. 1: in einer Schnittansicht zwei Wabenschichtteile zur Herstellung einer Wabenstruktur eines Sandwichbauteils;
- Fig. 2: in einer Schnittansicht ein Formwerkzeug mit zwei geschlossenen Werkzeughälften und einer darin angeordneten verformten Waben-struktur mit zwei Deckschichten; und
- Fig. 3: in einer Schnittansicht ein fertiggestelltes Sandwichbauteil.

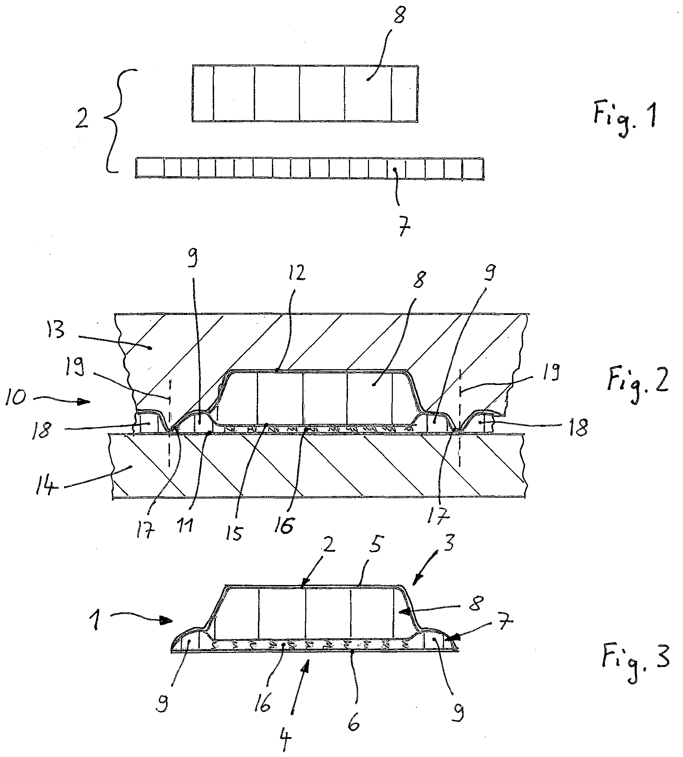

Ein Sandwichbauteil 1 (siehe Fig. 3) eines Fahrzeugs, wie z. B. ein Teil eines Dachmoduls oder ein Deckel eines öffnungsfähigen Daches wie eines Schiebedaches oder Schiebehebedaches oder dergleichen, weist einen Schichtaufbau mit einer zentralen Wabenstruktur 2 als Kernschicht und mit beidseits bzw. an der Außenseite 3 und an der Innenseite 4 des Sandwichbauteils 1 aufgebrachten Deckschichten 5 bzw. 6 auf.

Die Wabenstruktur 2 enthält eine erste Wabenschicht 7 und eine zweite Wabenschicht 8. Die erste Wabenschicht 7, die in Fig. 1 als unteres Teil dargestellt ist und im Sandwichbauteil 1 die innenseitige untere Wabenschicht 7 bildet, ist großflächiger gebildet als die zweite Wabenschicht 8, die in Fig. 1 als oberes Teil dargestellt ist und im Sandwichbauteil 1 die außenseitige obere Wabenschicht 8 bildet. Die erste untere Wabenschicht 7 weist eine insbesondere gleichmäßige Dicke auf, die geringer ist als die Dicke der zweiten oberen Wabenschicht 8. Die erste untere Wabenschicht 7 weist eine Drucksteifigkeit auf, die geringer ist als die Drucksteifigkeit der zweiten oberen Wabenschicht 8. Die Drucksteifigkeit bezeichnet die Steifigkeit oder Festigkeit der Waben bzw. der Wabenschichten 7 und 8 gegen komprimierende Verformung unter Belastung eines Presswerkzeugs.

Für die Herstellung der Wabenstruktur 2 werden die beiden Wabenschichten 7 und 8 derart aufeinander gelegt, dass die erste untere Wabenschicht 7 mit seitlichen Randabschnitten 9 seitlich über die zweite obere Wabenschicht 8 hinaussteht. Die beiden Wabenschichten 7 und 8 werden aneinander handhabungsfest fixiert, beispielsweise mittels Klammern, Sprühklebstoff oder doppelseitigem Klebeband oder dergleichen. Die Kraft der Fixierung soll für die Handhabung der miteinander verbundenen Wabenschichten 7 und 8 vor und beim Einlegen in ein Presswerkzeug ausreichend sein, eine höhere Verbindungskraft ist daher nicht erforderlich.

Die beiden miteinander verbundenen Wabenschichten 7 und 8 werden in eine Kavität eines Form- oder Presswerkzeugs 10 zwischen eine innere oder untere faserverstärkte Kunststoffschicht 11 und eine äußere oder obere faserverstärkte Kunststoffschicht 12 eingelegt. Die zwei Kunststoffschichten 11 und 12 werden z. B. als Schichten eingelegt oder mit einem Sprühwerkzeug eingespritzt, wobei das Kunststoffmaterial z. B. faserverstärktes Polyurethan oder ein Epoxidharz ist. Beim Schließen des Presswerkzeugs 10 presst die obere Presswerkzeughälfte 13, die im Wesentlichen die formgebende Kavität enthält, die zweite obere Wabenschicht 8 gegen die erste untere Wabenschicht 7, die unter Zwischenlage der unteren Kunststoffschicht 11 an der z. B. eine ebene Pressfläche aufweisenden unteren Presswerkzeughälfte 14 anliegt und dabei aufgrund ihrer geringeren Drucksteifigkeit im Bereich einer Anlagefläche 15 der oberen Wabenschicht 8 kollabiert und komprimiert wird, während die zweite obere Wabenschicht 8 aufgrund ihrer höheren Drucksteifigkeit ihre Dicke im Wesentlichen beibehält. Die erste untere Wabenschicht 7 weist somit einen zentralen verformten Verformungs- oder Kompressionsbereich 16 mit reduzierter Dicke auf sowie die Randbereiche 9, die sich außerhalb des zentralen komprimierten Wabenschichtbereichs oder Kompressionsbereichs 16 und der oberen Wabenschicht 8 befinden und im Wesentlichen ihre ursprüngliche Dicke beibehalten haben und durch die Formung im Wesentlichen der oberen Presswerkzeughälfte 13 ihre für das Sandwichbauteil 1 vorgesehene Form erhalten haben. Die obere Presswerkzeughälfte 13 enthält beispielsweise eine solche Formung, das der jeweilige Randbereich 9 an seinem Außenrand in einen dünnen Steg 17 verpresst wird, an dem überstehende Teile 18 des in dem Presswerkzeug 10 hergestellten Sandwichbauteils 1 abgetrennt werden können. Trennlinien 19 zum Darstellen beispielhafter Positionen für Abtrennungen sind in Fig. 2 mit unterbrochenen Linien eingezeichnet.

Die Drucksteifigkeit jeder der beiden Wabenschichten 7 und 8 kann z. B. durch Verwendung unterschiedlicher Wabenmaterialien, geringerer Papierstärken oder unterschiedlicher Papiersorten bei Papierwaben oder z. B. durch die Verwendung von verschiedenen Wabenklebstoffen eingestellt werden. Die Dicke oder Höhe der ersten unteren Wabenschicht 7 bzw. deren Waben entspricht der maximalen Dicke des Sandwichbauteils 1 in seinen Randbereichen 9 oder ist nur geringfügig größer und wird beim Pressen auf die gewünschte Dicke komprimiert. Die zweite obere Wabenschicht 8 umfasst nur den Kernbereich des Sandwichbauteils 1, der gegenüber den Randbereichen 9 mit zweilagiger Wabenstruktur 2 gebildet ist. Die maximale Dicke der zweiten oberen Wabenschicht 8 entspricht - abhängig von dem Kompressionsgrad des zentralen Teils oder Kompressionsbereichs 16 der unteren Wabenschicht 7 - maximal im Wesentlichen der größten Bauteilhöhe des Sandwichbauteils 1 oder sie ist aufgrund der Dicke des zentralen Teils der unteren Wabenschicht 7 dementsprechend geringer.

Bei diesem Composite-Produktionsprozess zum Herstellen des Sandwichbauteils 1 werden somit die beiden Wabenschichten 7 und 8, eingebettet zwischen den zwei faserverstärkten Kunststoffschichten 11 und 12, in die gewünschte Form verprägt, wobei die beiden Kunststoffschichten 11 und 12 bei dem fertiggestellten Sandwichbauteil 1 die beiden Deckschichten 5 und 6 bilden. Beim Pressvorgang kollabiert zunächst die untere druckweichere Wabenschicht 7. Dadurch wird die Wabendicke der unteren ersten Wabenschicht 7 im Innenbereich des Sandwichbauteils 1 stark reduziert und der Kunststoff der faserverstärkten Kunststoffschichten 11 und 12, der die Fasern der Faserverstärkung an den Außenseiten oder Außenflächen der Wabenschichten 7 und 8 anbindet, kann von der Kunststoffschicht 11 her durch die erste untere Wabenschicht 7 bis zur zweiten oberen Wabenschicht 8 in die Wabenkernstruktur des Sandwichbauteils 1 eindringen. Der aushärtende Kunststoff, der nun die beiden Wabenschichten 7 und 8 an ihrer gemeinsamen Kontakt- oder Anlagefläche 15 umschließt, hält die beiden Wabenschichten 7 und 8 fest zusammen. Durch diese feste Verbindung wird ein Federeffekt zwischen den beiden Wabenschichten 7 und 8 ausgeschlossen und eine formstabile Wabenstruktur 2 bereitgestellt.

Die Dicken der beiden Deckschichten, z. B. 0,5 mm bis 1,0 mm, sind bei der Auswahl und Auslegung der Wabenschicht 7 und 8 zu berücksichtigen. Grundsätzlich können auch noch weitere Deckschichten im Presswerkzeug 10 (z. B. als In Mold Coat - Schicht oder IMC-Schicht) oder anschließend außerhalb des Presswerkzeugs 10 aufgebracht werden.

Die verstärkenden Fasern können z. B. Basaltfasern, Kohlefasern, Naturfasern oder Glasfasern sein.

Die Waben der Wabenschichten sind bevorzugt aus Papier, aus Aluminium oder aus einem Kunststoff wie z. B. Phenolharz hergestellt. Als Waben werden auch z. B. wellenförmig verlaufende Bauteile oder Abstandsteile, die senkrecht zu den Außenflächen der Wabenschicht verlaufen, oder zellenartige Strukturen verstanden.

Die in der obigen Beschreibung enthaltenen Richtungsangaben "oben" und "unten" sowie "außen" und "innen" betreffen lediglich die Darstellung des Ausführungsbeispiels in den Figuren und schränken z. B. die Anordnung der beiden Wabenschichten 7 und 8 nicht ein, so dass auch die druckfestere Wabenschicht 8 eine untere oder innere Stellung in der Wabenstruktur und dem Sandwichbauteil 1 einnehmen kann.

Wahlweise erfolgen im Anschluss an das Entformen des Sandwichbauteils 1 aus dem Form- oder Presswerkzeug weitere Verfahrensschritte, wie z. B. das Trimmen oder Zuschneiden der Ränder oder Kanten des Sandwichbauteils 1.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

### Bezugszeichenliste

| | | | |
|---|---|---|---|
| 1 | Sandwichbauteil | 11 | innere Kunststoffschicht |
| 2 | Wabenstruktur | 12 | äußere Kunststoffschicht |
| 3 | Außenseite | 13 | obere Presswerkzeughälfte |
| 4 | Innenseite | 14 | untere Presswerkzeughälfte |
| 5 | Deckschicht | 15 | Anlagefläche |
| 6 | Deckschicht | 16 | Kompressionsbereich |
| 7 | erste Wabenschicht | 17 | Steg |
| 8 | zweite Wabenschicht | 18 | Teil |
| 9 | Randabschnitt | 19 | Trennlinie |
| 10 | Presswerkzeug | | |

## Patentansprüche

1. Fahrzeug-Sandwichbauteil (1) mit einem eine Wabenstruktur (2) aufweisenden Schichtaufbau,
**dadurch gekennzeichnet,**
**dass** die Wabenstruktur (2) eine erste untere Wabenschicht (7) und eine zweite obere Wabenschicht (8) aufweist,
**dass** die erste untere Wabenschicht (7) zumindest einen Randabschnitt (9), der in Querrichtung seitlich über die zweite obere Wabenschicht (8) hinaus ragt, sowie einen zentralen Wabenschichtbereich oder Kompressionsbereich (16) aufweist, der eine durch Komprimierung relativ zum Randabschnitt (9) reduzierte Dicke aufweist und auf dem die zweite obere Wabenschicht (8) angeordnet ist.

2. Fahrzeug-Sandwichbauteil nach Anspruch 1,
**dadurch gekennzeichnet, dass** die erste untere Wabenschicht (7) eine Drucksteifigkeit aufweist, die geringer ist als die Drucksteifigkeit der zweiten oberen Wabenschicht (8).

3. Fahrzeug-Sandwichbauteil nach Anspruch 1 oder 2,
**dadurch gekennzeichnet, dass** die zweite obere Wabenschicht (8) mit der ersten unteren Wabenschicht (7) im zentralen Kompressions- oder Wabenschichtbereich (16) eine gemeinsame Kontakt- oder Anlagefläche (15) aufweist.

4. Fahrzeug-Sandwichbauteil nach einem der Ansprüche 1 bis 3,
**dadurch gekennzeichnet, dass** sich ein Kunststoff einer insbesondere faserverstärkten unteren Kunststoffschicht (11), die eine Deckschicht (6) bildet, durch den zentralen Kompressions- oder Wabenschichtbereich (16) der ersten unteren Wabenschicht (7) erstreckt und eine feste Verbindung mit der zweiten oberen Wabenschicht (8) bildet.

5. Fahrzeug-Sandwichbauteil nach einem der Ansprüche 1 bis 4,
**dadurch gekennzeichnet, dass** eine insbesondere faserverstärkte untere Kunststoffschicht (11) eine untere oder innenseitige Deckschicht (6) und eine insbesondere faserverstärkte obere Kunststoffschicht (12) eine obere oder außenseitige Deckschicht (5) des Sandwichbauteils (1) bildet.

6. Fahrzeug-Sandwichbauteil nach einem der Ansprüche 1 bis 5,
**dadurch gekennzeichnet, dass** der Randabschnitt (9) mit reduzierter Dicke am Sandwichbauteil (1) umlaufend oder zumindest abschnittsweise gebildet ist.

7. Verfahren zum Herstellen eines Fahrzeug-Sandwichbauteils (1) mit einem Schichtaufbau mit einer Wabenstruktur (2) sowie einer ersten oder inneren Deckschicht (6),
wobei in einem Presswerkzeug (10) zwei Wabenschichten (7, 8) aus Wabenmaterialien mit unterschiedlichen Drucksteifigkeiten gegeneinander gepresst werden und dabei die zweite drucksteifere Wabenschicht (8) die erste weniger drucksteife Wabenschicht (7) im Bereich der gemeinsamen Anlagefläche (15) in einem Kompressions- oder Wabenschichtbereich (16) auf eine reduzierte Dicke komprimiert,
wobei ein Kunststoff einer insbesondere faserverstärkten äußeren Kunststoffschicht (11), die die Deckschicht (6) auf der komprimierten Wabenschicht (7) bildet, durch den Kompressions- oder Wabenschichtbereich (16) der ersten komprimierten Wabenschicht (7) hindurch dringt und eine feste Verbindung mit der anderen zweiten Wabenschicht (8) bildet.

8. Verfahren nach Anspruch 7,
**dadurch gekennzeichnet, dass** das Sandwichbauteil (1) mit zumindest einem Randabschnitt (9) hergestellt wird, der in der ersten weniger drucksteifen Wabenschicht (7) außerhalb ihres Kompressions- oder Wabenschichtbereichs (16) und außerhalb der anderen zweiten drucksteiferen Wabenschicht (8) gebildet wird.

9. Verfahren nach Anspruch 7 oder 8,
**dadurch gekennzeichnet, dass** eine zweite oder äußere Deckschicht (5) auf die Wabenstruktur (2) aufgebracht wird.

10. Verfahren nach einem der Ansprüche 7 bis 9 zum Herstellen eines Fahrzeug-Sandwichbauteils (1) nach einem der Ansprüche 1 bis 6.

## Claims

1. Vehicle sandwich component (1) having a layer construction which has a honeycomb structure (2), **characterized in that**
the honeycomb structure (2) has a first lower honeycomb layer (7) and a second upper honeycomb layer (8),
**in that** the first lower honeycomb layer (7) has at least one edge section (9) which protrudes laterally beyond the second upper honeycomb layer (8) in the transverse direction, and a central honeycomb layer region or compression region (16) which has a thickness reduced by way of compression relative to the edge section (9) and on which the second upper honeycomb layer (8) is arranged.

2. Vehicle sandwich component according to Claim 1, **characterized in that** the first lower honeycomb layer (7) has a compressive rigidity which is lower than the compressive rigidity of the second upper honeycomb layer (8).

3. Vehicle sandwich component according to Claim 1 or 2,
**characterized in that** the second upper honeycomb layer (8) has a common contact or bearing face (15) with the first lower honeycomb layer (7) in the central compression or honeycomb layer region (16).

4. Vehicle sandwich component according to one of Claims 1 to 3,
**characterized in that** a plastic of a lower plastic layer (11) which is, in particular, fiber-reinforced and forms a covering layer (6) extends through the central compression or honeycomb layer region (16) of the first lower honeycomb layer (7) and forms a fixed connection to the second upper honeycomb layer (8).

5. Vehicle sandwich component according to one of Claims 1 to 4,
**characterized in that** a lower plastic layer (11) which is, in particular, fiber-reinforced forms a lower or inner-side covering layer (6), and an upper plastic layer (12) which is, in particular, fiber-reinforced forms an upper or outer-side covering layer (5) of the sandwich component (1).

6. Vehicle sandwich component according to one of Claims 1 to 5,
**characterized in that** the edge section (9) is formed circumferentially or at least in sections with a reduced thickness on the sandwich component (1).

7. Method for producing a vehicle sandwich component (1) having a layer construction with a honeycomb structure (2) and a first or inner covering layer (6), two honeycomb layers (7, 8) consisting of honeycomb materials with different compressive rigidities being pressed against one another in a compression mold (10), and the second more compressively rigid honeycomb layer (8) compressing the first less compressively rigid honeycomb layer (7) in the region of the common bearing face (15) in a compression or honeycomb layer region (16) to a reduced thickness in the process,
a plastic of an outer plastic layer (11) which is, in particular, fiber-reinforced and forms the covering layer (6) on the compressed honeycomb layer (7) penetrating through the compression or honeycomb layer region (16) of the first compressed honeycomb layer (7) and forming a fixed connection to the other second honeycomb layer (8).

8. Method according to Claim 7,
**characterized in that** the sandwich component (1) is produced with at least one edge section (9) which is formed in the first less compressively rigid honeycomb layer (7) outside its compression or honeycomb layer region (16) and outside the other second more compressively rigid honeycomb layer (8).

9. Method according to Claim 7 or 8,
**characterized in that** a second or outer covering layer (5) is applied to the honeycomb structure (2).

10. Method according to one of Claims 7 to 9 for producing a vehicle sandwich component (1) according to one of Claims 1 to 6.

## Revendications

1. Composant sandwich de véhicule (1) ayant une constitution stratifiée comprenant une structure alvéolaire (2),
**caractérisé en ce que**
la structure alvéolaire (2) comprend une première couche alvéolaire inférieure (7) et une deuxième couche alvéolaire supérieure (8),
**en ce que** la première couche alvéolaire inférieure (7) comprend au moins une section de bord (9), qui dépasse dans la direction transversale latéralement au-dessus de la deuxième couche alvéolaire supérieure (8), ainsi qu'une zone de couche alvéolaire centrale ou zone de compression (16), qui présente une épaisseur réduite par compression relativement à la section de bord (9) et sur laquelle la deuxième couche alvéolaire supérieure (8) est agencée.

2. Composant sandwich de véhicule selon la revendication 1, **caractérisé en ce que** la première couche alvéolaire inférieure (7) présente une rigidité en pression qui est inférieure à la rigidité en pression de la deuxième couche alvéolaire supérieure (8) .

3. Composant sandwich de véhicule selon la revendication 1 ou 2, **caractérisé en ce que** la deuxième couche alvéolaire supérieure (8) présente avec la première couche alvéolaire inférieure (7) dans la zone de couche alvéolaire ou de compression centrale (16) une surface de contact ou d'appui commune (15).

4. Composant sandwich de véhicule selon l'une quelconque des revendications 1 à 3, **caractérisé en ce qu'**une matière plastique d'une couche de matière plastique inférieure (11) notamment renforcée par des fibres, qui forme une couche de recouvrement (6), s'étend au travers de la zone de couche alvéolaire ou de compression centrale (16) de la première couche alvéolaire inférieure (7) et forme une liaison fixe avec la deuxième couche alvéolaire supérieure (8).

5. Composant sandwich de véhicule selon l'une quelconque des revendications 1 à 4, **caractérisé en ce qu'**une couche de matière plastique inférieure (11) notamment renforcée par des fibres forme une couche de recouvrement inférieure ou du côté intérieur (6) et une couche de matière plastique supérieure (12) notamment renforcée par des fibres forme une couche de recouvrement supérieure ou du côté extérieur (5) du composant sandwich (1).

6. Composant sandwich de véhicule selon l'une quelconque des revendications 1 à 5, **caractérisé en ce que** la section de bord (9) est formée avec une épaisseur réduite tout autour ou au moins en sections sur le composant sandwich (1).

7. Procédé de fabrication d'un composant sandwich de véhicule (1) ayant une constitution stratifiée munie d'une structure alvéolaire (2), ainsi que d'une première couche de recouvrement ou couche de recouvrement intérieure (6),
dans lequel, dans un outil de pressage (10), deux couches alvéolaires (7, 8) en matériaux alvéolaires ayant différentes rigidités en pression sont pressées l'une contre l'autre et la deuxième couche alvéolaire plus rigide en pression (8) comprime la première couche alvéolaire moins rigide en pression (7) dans la zone de la surface d'appui commune (15) dans une zone de couche alvéolaire ou de compression (16) à une épaisseur réduite,
dans lequel une matière plastique d'une couche de matière plastique extérieure (11) notamment renforcée par des fibres, qui forme la couche de recouvrement (6) sur la couche alvéolaire comprimée (7), traverse la zone de couche alvéolaire ou de compression (16) de la première couche alvéolaire comprimée (7) et forme une liaison fixe avec l'autre deuxième couche alvéolaire (8) .

8. Procédé selon la revendication 7, **caractérisé en ce que** le composant sandwich (1) est fabriqué avec au moins une section de bord (9), qui est formée dans la première couche alvéolaire moins rigide en pression (7) à l'extérieur de sa zone de couche alvéolaire ou de compression (16) et à l'extérieur de l'autre deuxième couche alvéolaire plus rigide en pression (8).

9. Procédé selon la revendication 7 ou 8, **caractérisé en ce qu'**une deuxième couche de recouvrement ou couche de recouvrement extérieure (5) est appliquée sur la structure alvéolaire (2).

10. Procédé selon l'une quelconque des revendications 7 à 9 pour la fabrication d'un composant sandwich de véhicule (1) selon l'une quelconque des revendications 1 à 6.
